# EUROPEAN PATENT SPECIFICATION

(11) **EP 3 825 577 B1**
(45) Date of publication and mention of the grant of the patent: **15.06.2022**
(21) Application number: 20206741.9
(22) Date of filing: 10.11.2020
(51) Int. Cl.: F16H 19/08

(54) **KINETIC ENERGY TRANSMISSION SYSTEM FOR CONVERTING RECIPROCATING INPUT MOTION TO UNIDIRECTIONAL ROTARY OUTPUT MOTION**
SYSTEM ZUR ÜBERTRAGUNG VON KINETISCHER ENERGIE ZUR UMWANDLUNG EINER HIN- UND HERGEHENDEN BEWEGUNG IN EINE GLEICHGERICHTETE ROTIERENDE AUSGABEBEWEGUNG
SYSTÈME DE TRANSMISSION D'ÉNERGIE CINÉTIQUE POUR CONVERTIR LE MOUVEMENT D'ENTRÉE ALTERNATIF EN MOUVEMENT DE SORTIE ROTATIF UNIDIRECTIONNEL

(30) Priority: 20.11.2019 CN 201911140660
(43) Date of publication of application: 26.05.2021
(73) Proprietor: Hung, Jen-Che, Taichung (TW)
(72) Inventor: Hung, Jen-Che, Taichung (TW)
(74) Representative: Mewburn Ellis LLP

(56) References cited:
- DE-C- 848 267
- JP-A- H07 198 017
- US-A- 708 286
- US-A- 5 386 745

## Description

### BACKGROUND

US9,139,251B discloses a mechanism for converting reciprocating lever action to unidirectional rotary motion. However, the mechanism has the following drawbacks.
1. When driving the reciprocating lever 15 back and forth the belts 26,27 will be frictionally resisted by the drag elements 22 and consume much energy, thereby reducing its output efficiency.
2. The whole mechanism requires many elements, including belts, wheels, gears and capstans, which tend to increase the production and maintenance cost, and may also waste a lot of energy when operating the mechanism.
3. The whole system with many elements is quite complex and may occupy a lot of space, so that it is difficult to make a compact unit or device.

The present inventor has noted these drawbacks and invented the present kinetic energy transmission system to provide a more economic and efficient way. US 708 286 also shows a mechanism interconverting oscillating motion into unidirectional rotary motion.

### THE INVENTION

The object of the present invention is to provide a kinetic energy transmission system comprising a reciprocating actuator including a swing lever; and a direction-conversion and energy output mechanism, which may convert the reciprocating motions input by the reciprocating actuator to a unidirectional output rotary motion so as to output uninterrupted kinetic energy by means of the unidirectional rotary motion, increasing efficiency and economic value.

### BRIEF DESCRIPTION OF THE DRAWINGS

Fig. 1 is a top-view illustration of a system embodying the invention, when operated in a forward rotation.
Fig. 2 is a front view showing the reciprocating actuator of the present system.
Fig. 3 is a partially enlarged top-view illustration of several gears or parts of the present system.
Fig. 4 is a top-view illustration showing a forward-rotation clutch of the present system.
Fig. 5 is a front-view illustration of the forward-rotation clutch as viewed from Fig. 4.
Fig. 6 is a top-view illustration of a front gear of the present system.
Fig. 7 is a rear-view illustration of the front gear as viewed from Fig. 6.
Fig. 8 is a top-view illustration of an engagement of the forward-rotation clutch with the front gear.
Fig. 9 is a top-view illustration of the present system when operated in a reverse rotation.

### DETAILED DESCRIPTION

As shown in the drawings, a system embodying the present invention comprises a reciprocating actuator 100 and a direction-conversion and energy output mechanism 200.

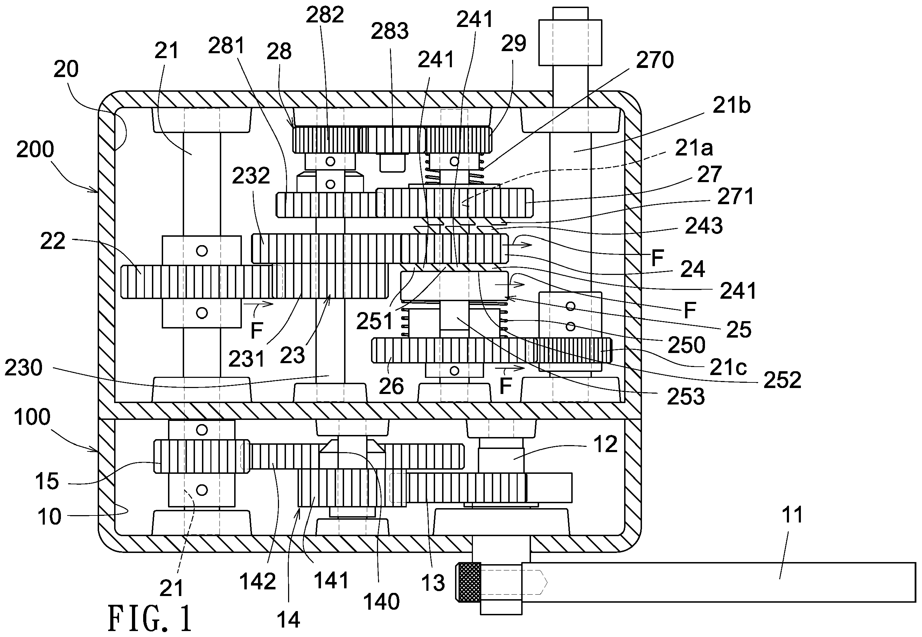

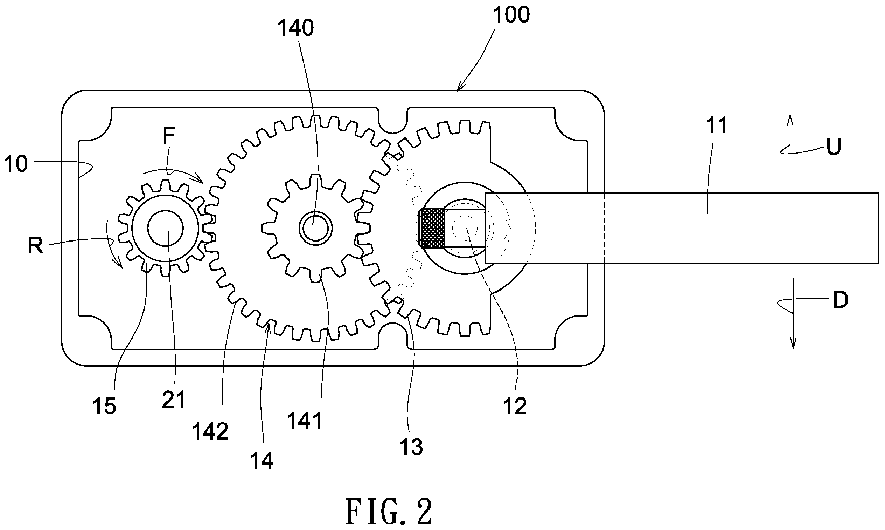

As shown in Figs. 1 and 2, the reciprocating actuator 100 comprises a swing lever 11, a lever shaft 12 pivotally mounted in an actuator housing 10 and connected to a lever end of the swing lever 11, a sector gear 13 secured to the actuator lever 11, an intermediate actuating gear 14 engaged with the sector gear 13, and an axle-driving gear 15 engaged with the intermediate actuating gear 14 and secured to an outer (or front) end of an input shaft 21 of the direction-conversion and energy output mechanism 200. The intermediate actuating gear 14 includes a small gear 141 engaged with the sector gear 13, and a large gear 142 coaxially secured with the small gear 141 with both gears 141,142 secured on a gear shaft 140. The large gear 142 is engaged with the axle-driving gear 15. The actuator housing 10 is formed on a front portion of a main housing 20 of the direction-conversion and energy output mechanism 200 for mounting the gears 13,14,15 within the actuator housing 10. The swing lever 11 may be manually reciprocated or mechanically or physically reciprocated.

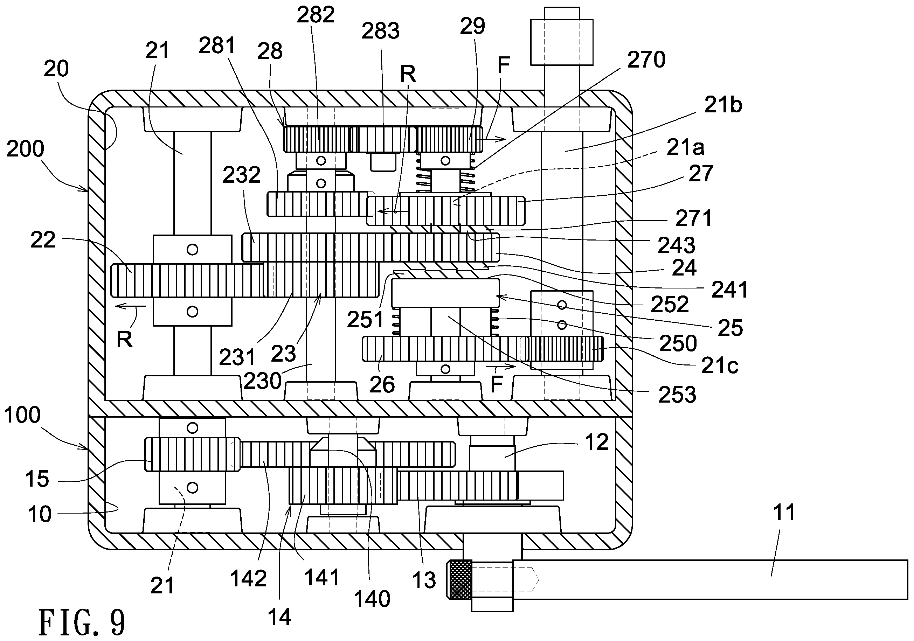

The direction-conversion and energy output mechanism 200 comprises a main housing 20 for storing the related gears in the main housing 20, an input shaft 21 rotatably mounted in the main housing 20, having a shaft end of the input shaft 21 secured with an axle-driving gear 15 of the reciprocating actuator 100 for receiving an input reciprocal motion from said reciprocating actuator 100, an input gear 22 secured on the input shaft 21, an intermediate gear 23 rotatably mounted about an intermediate shaft 230 rotatably mounted in the main housing 20, a bidirectional driving gear 24 rotatably mounted about a transmission shaft 21a and engaged with the intermediate gear 23; the bidirectional driving gear 24 having a plurality of forward-rotation ratchet teeth 241 annularly formed on a first (or front) wheel surface 242 of the bidirectional driving gear 24, and having a plurality of reverse-rotation ratchet teeth 243 annularly formed on a second (or rear) wheel surface 244 of the bidirectional driving gear 24 opposite to the first wheel surface 242; a forward-rotation clutch 25 slidably held about the transmission shaft 21a, having a plurality of forward-rotation ratchet teeth 251 annularly formed on a rear wheel surface 252 of the forward-rotation clutch 25 to be normally engaged with the forward-rotation ratchet teeth 241 formed on the first wheel surface 242 of the bidirectional driving gear 24 to be forwardly (F) rotated or driven by the bidirectional driving gear 24; a front gear 26 secured on the transmission shaft 21a and slidably engaged with the forward-rotation clutch 25 for forwardly rotating the transmission shaft 21a when the forward-rotation clutch 25 is forwardly rotated (F) as forwardly driven (F) by the bidirectional driving gear 24 (Fig. 1), and the front gear 26 engaged with an output gear 21c secured on an output shaft 21b for outputting unidirectional rotary motion with rotary kinetic energy; a reverse-rotation clutch 27 rotatably mounted about the transmission shaft 21a and having a plurality of reverse-rotation ratchet teeth 271 annularly formed on a front wheel surface 272 of the reverse-rotation clutch 27, whereby upon a reverse rotation (R) of the bidirectional driving gear 24, the reverse-rotation ratchet teeth 271 on the reverse-rotation clutch 27 will be engaged with the reverse-rotation ratchet teeth 243 formed on the second wheel surface 244 of the bidirectional driving gear 24 so as to reversely rotate (R) the reverse-rotation clutch 27 as driven by the bidirectional driving gear 24; and a reverse-rotation gear set 28 engaged between the reverse-rotation clutch 27 and a rear gear 29 secured on the transmission shaft 21a, whereby upon a reverse rotation (R) of the bidirectional driving gear 24, the rear gear 29 and the transmission shaft 21a will be forwardly rotated (F) as shown in Fig. 9 as being engageably driven by the reverse-rotation gear set 28, thereby also forwardly driving (F) the front gear 26 for outputting unidirectional rotary motion with rotary kinetic energy through the output gear 21c as engaged with the front gear 26 and through the output shaft 21b having the output gear 21c secured on the output shaft 21b. The transmission shaft 21a and the output shaft 21b are respectively rotatably mounted in the main housing 20.

A biasing or tensioning spring 250 is provided between the front gear 26 and the forward-rotation clutch 25 to normally bias or tension the forward-rotation clutch 25 towards the bidirectional driving gear 24 for engaging the forward-rotation clutch 25 with the bidirectional driving gear 24 for a forward rotation (F) as shown in Fig. 1, as reversely driven by the bidirectional driving gear 24.

Another biasing or tensioning spring 270 is provided between the rear gear 29 and the reverse-rotation clutch 27 to normally bias or tension the reverse-rotation clutch 27 towards the bidirectional driving gear 24 for engaging the reverse-rotation clutch 27 with the bidirectional driving gear 24 for a reverse rotation (R) as shown in Fig. 9 as reversely driven by the bidirectional driving gear 24.

The reverse-rotation gear set 28 comprises a first gear 281 engaged with the reverse-rotation clutch 27, and secured on the intermediate shaft 230, a second gear 282 positioned behind the first gear 281 and secured on the intermediate shaft 230, and a third gear 283 engaged between the second gear 282 and the rear gear 29, whereby upon the reverse rotation (R) of the reverse-rotation clutch 27, the rear gear 29 and the transmission shaft 21a will be rotated in a forward rotation (F).

The intermediate gear 23 comprises a small gear 231 engaged with the input gear 22, and a large gear 232 coaxially secured with the small gear 231 and engaged with the bidirectional driving gear 24, which is smaller than the large gear 232 for accelerating the rotation speed of the driving gear 24.

The output shaft or gear 21b,c may be connected with any rotary machine or apparatus to output the forward-rotation kinetic energy by converting a reciprocating input kinetic energy to a unidirectional rotational output kinetic energy.

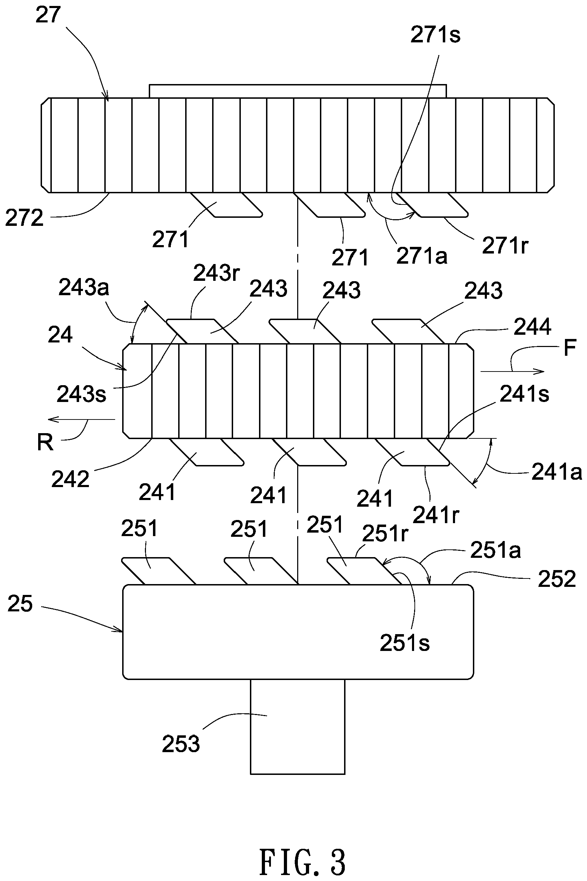

Each forward-rotation ratchet tooth 241 formed on the first wheel surface 242 of the bidirectional driving gear 24, especially as shown in Fig. 3, comprises at least a tooth slope 241s inclined leftwardly from a tooth ridge 241r towards the first wheel surface 242 to define an acute angle 241a with the first wheel surface 242 as measured from the forward-rotation direction F. Each reverse-rotation ratchet tooth 243 comprises at least a tooth slope 243s inclined rightwardly from a tooth ridge 243r towards the second wheel surface 244 to define an acute angle 243a with the second wheel surface 244 as measured from the reverse-rotation direction R.

Each forward-rotation ratchet tooth 251 formed on the rear wheel surface 252 of the forward-rotation clutch 25 comprises at least a tooth slope 251s inclined rightwardly from a tooth ridge 251r towards the rear wheel surface 252 to define an obtuse angle 251a with the rear wheel surface 252 as measured from the forward-rotation direction F, whereby upon a forward rotation F of the bidirectional driving gear 24, the forward-rotation ratchet teeth 241 of the bidirectional driving gear 24 will be engaged with the forward-rotation ratchet teeth 251 of the forward-rotation clutch 25 to forwardly rotate (F) the forward-rotation clutch 25 as shown in Fig. 1.

Each reverse-rotation ratchet tooth 271 formed on the front wheel surface 272 of the reverse-rotation clutch 27 comprises at least a tooth slope 271s inclined leftwardly from a tooth ridge 271r towards the front wheel surface 272 to define an obtuse angle 271a with the front wheel surface 272 as measured from the reverse-rotation direction R, whereby upon a reverse rotation R of the bidirectional driving gear 24, the reverse-rotation ratchet teeth 243 of the bidirectional driving gear 24 will be engaged with the reverse-rotation teeth 271 of the reverse-rotation clutch 27 to reversely rotate (R) the reverse-rotation clutch 27 as shown in Fig. 9. It will be understood that leftward and rightward are used herein to refer to mutually opposing directions and to facilitate reference to the drawings, and do not imply absolute senses unless the context requires.

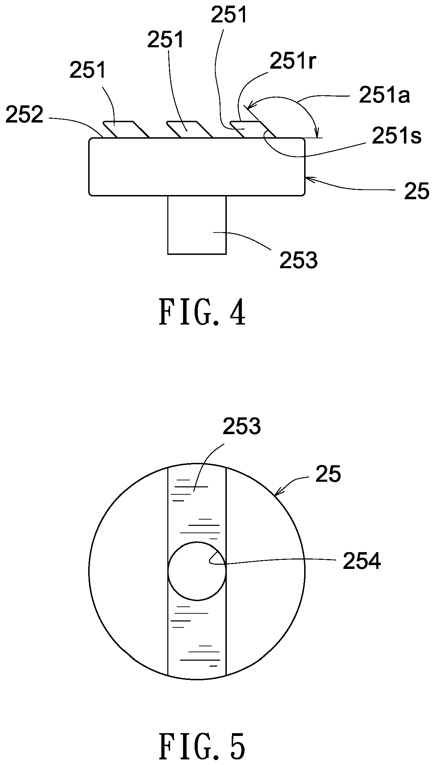

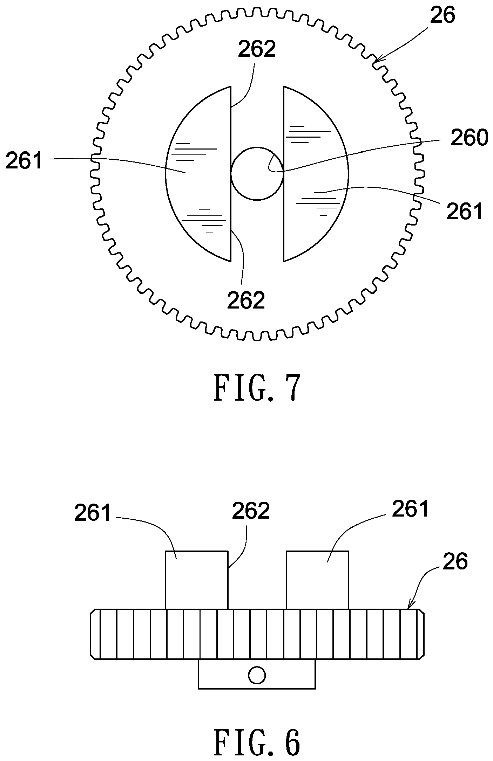

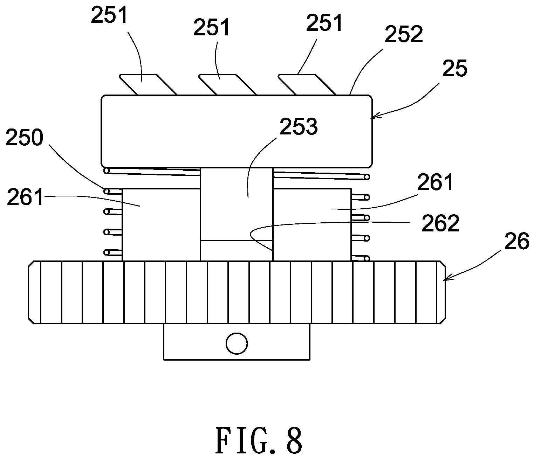

As shown in Figs. 4, 5, 6 and 7, the forward-rotation clutch 25 has a pair of protruding keys 253 diametrically formed on the clutch 25, each protruding key 253 disposed between a central clutch hole 254 and a periphery of the clutch 25, and the two protruding keys 253 protruding forwardly from a front surface of the clutch 25 to be slidably engaged with a pair of sliding slot 262 diametrically recessed in a pair of extensions 261 disposed about a central gear hole 260 and formed on a rear surface of the front gear 26, whereby upon a forward rotation F of the bidirectional driving gear 24, the forward-rotation clutch 25 will be forwardly rotated by the bidirectional driving gear 24 to cooperatively forwardly rotate (F) the front gear 26, since the two protruding keys 253 are engaged with the two sliding slots 262 as shown in Fig. 8, and also rotate the transmission shaft 21a to thereby rotate the output gear 21c and output shaft 21b for outputting the rotary kinetic energy.

The bidirectional driving gear 24 and the reverse-rotation clutch 27 are each rotatably mounted about (not rigidly rotationally fixed or dead fixed on) the transmission shaft 21a. Upon forward rotation (F) of the bidirectional driving gear 24, the reverse-rotation ratchet teeth 243 formed on the rear wheel surface 244 of the bidirectional driving gear 24 will obliquely thrust the reverse-rotation ratchet teeth 271 of the reverse-rotation clutch 27 to separate the reverse-rotation ratchet teeth 271 from the reverse-rotation ratchet teeth 243 (Fig. 1), thereby separating the reverse-rotation clutch 27 from the bidirectional driving gear 24. At this time, the reverse-rotation clutch 27 will not be forwardly driven since the clutch 27 is rotatably mounted about the transmission shaft 21a, without being rigidly rotationally fixed or dead fixed on the transmission shaft 21a. This means that during forward rotation F of the bidirectional driving gear 24, the reverse-rotation clutch 27 is unaffected by the bidirectional driving gear 24 as forwardly rotated (F), without conflicting the transmission shaft 21a as forwardly rotated.

When operating the present system and if the swing lever 11 is depressed downwardly as D indicated in Fig. 2, the sector gear 13, as engaged with the intermediate actuating gear 14, will drive the axle-driving gear 15 to rotate in a forward-rotation direction F. The input shaft 21 and the input gear 22 secured on the input shaft 21 will be driven and rotated in a forward-rotation direction F to drive the intermediate gear 23 and the bidirectional driving gear 24, as engaged with the intermediate gear 23, to rotate in a forward-rotation direction F as shown in Fig. 1. Since the ratchet teeth 241 of the bidirectional driving gear 24 are engaged with the ratchet teeth 251 of the forward-rotation clutch 25, the clutch 25 will be driven in a forward-rotation F, to forwardly rotate the front gear 26 and the transmission shaft 21a in a forward-rotation direction F, thereby outputting the rotary kinetic energy through the output gear 21c and output shaft 21b.

When upwardly lifting the swing lever 11 as indicated by arrow U in Fig. 2 the sector gear 13, engaged with the intermediate actuating gear 14, will drive the axle-driving gear 15 and the input shaft 21 as well as the input gear 22 to rotate in the reverse-rotation direction of arrow R. Then, the bidirectional driving gear 24, as engaged with the intermediate gear 23, which in turn is engaged with the input gear 22, will be driven to rotate in a reverse-rotation direction R as shown in Fig. 9. The ratchet teeth 243 of the bidirectional driving gear 24 will be engaged with the ratchet teeth 271 of the reverse-rotation clutch 27 to thereby rotate the reverse-rotation clutch 27 in a reverse-rotation direction R. Simultaneously, the ratchet teeth 241 will obliquely thrust the ratchet teeth 251 to separate the forward-rotation clutch 25 from the bidirectional driving gear 24. The reverse-rotation clutch 27, as engaged with the reverse-rotation gear set 28, will forwardly rotate the rear gear 29 in a forward-rotation direction F to thereby rotate the transmission shaft 21a, on which the rear gear 29 is secured, in a forward-rotation direction F.

So, regardless of whether the lever 11 is moving downward (D) to forwardly rotate (F) the input gear 22, or moving upward (U) to reversely rotate (R) the input gear 22, the mechanism 200 including the bidirectional driving gear 24, the forward-rotation clutch 25 and the reverse-rotation clutch 27 of the present system will always ensure a forward rotation F of the transmission shaft 21a to uninterruptedly output the rotary kinetic energy or drive.

When the reverse-rotation clutch 27 is rotated in a reverse rotation direction R (Fig. 9), the first gear 281 of the reverse-rotation gear set 28, as engaged with the reverse-rotation clutch 27, will be forwardly rotated, and the second gear 282 behind the first gear 281 will be synchronously rotated forwardly. The third gear 283, as engaged with the second gear 282, will be reversely rotated. The rear gear 29, as engaged with the third gear 283, will be rotated forwardly (F) so as to rotate the transmission shaft 21a forwardly (F).

Any rotary machine or kinetic energy output device to be connected with the output shaft 21b is not limited in the present invention. The reciprocating actuator 100 may be linked with any reciprocating or swinging system or apparatus to input reciprocating motion into the present invention, also being not limited.

Each or any ratchet tooth 241,243,251,271 may include two tooth slopes 241s,243s,251s,271s, as shown in the drawing figures of the present application. The degrees of each acute angle 241a,243a or each obtuse angle 251a,271a are not limited in the present invention.

The present system can provide the following advantages relative to known systems.
1. The gear set or system may be arranged or constructed to be a compact unit without occupying a large space or volume.
2. With respect to the energy input and output process, the system may be operated very smoothly, thereby minimizing the friction loss and increasing the energy output efficiency.
3. The elements of the system are not complex or redundant, thereby increasing the operation convenience and decreasing the maintenance problems.

## Claims

1. A kinetic energy transmission system comprising: a reciprocating actuator (100); and a direction-conversion and energy output mechanism (200) connected to said reciprocating actuator (100) and comprising: a main housing (20); an input shaft (21) rotatably mounted in the main housing (20), having a shaft end of the input shaft (21) connected with the reciprocating actuator (100) for receiving an input reciprocal motion from said reciprocating actuator (100); an input gear (22) secured on the input shaft (21); an intermediate gear (23) rotatably mounted in the main housing (20), and **characterized in that** said direction-conversion and energy output mechanism (200) comprises:
a bidirectional driving gear (24) rotatably mounted about a transmission shaft (21a) and engaged with the intermediate gear (23); the bidirectional driving gear (24) having a plurality of forward-rotation ratchet teeth (241) annularly formed on a first wheel surface (242) of the bidirectional driving gear (24), and having a plurality of reverse-rotation ratchet teeth (243) annularly formed on a second wheel surface (244) of the bidirectional driving gear (24) opposite to the first wheel surface (242); a forward-rotation clutch (25) slidably held about the transmission shaft (21a), having a plurality of forward-rotation ratchet teeth (251) annularly formed on a rear wheel surface (252) of the forward-rotation clutch (25) to be normally engaged with the forward-rotation ratchet teeth (241) formed on the first wheel surface (242) of the bidirectional driving gear (24) to be forwardly (F) rotated or driven by the bidirectional driving gear (24); a front gear (26) secured on the transmission shaft (21a) and slidably engaged with the forward-rotation clutch (25) for forwardly rotating the transmission shaft (21a) when the forward-rotation clutch (25) is forwardly rotated (F) as forwardly driven (F) by the bidirectional driving gear (24), and the front gear (26) engaged with an output gear (21c) secured on an output shaft (21b) for outputting unidirectional rotary motion with rotary kinetic energy;
a reverse-rotation clutch (27) rotatably mounted about the transmission shaft (21a) and having a plurality of reverse-rotation ratchet teeth (271) annularly formed on a front wheel surface (272) of the reverse-rotation clutch (27), whereby upon a reverse rotation (R) of the bidirectional driving gear (24), the reverse-rotation ratchet teeth (271) on the reverse-rotation clutch (27) will be engaged with the reverse-rotation ratchet teeth (243) formed on the second wheel surface (244) of the bidirectional driving gear (24) so as to reversely rotate (R) the reverse-rotation clutch (27) as driven by the bidirectional driving gear (24); and a reverse-rotation gear set (28) engaged between the reverse-rotation clutch (27) and a rear gear (29) secured on the transmission shaft (21a), whereby upon a reverse rotation (R) of the bidirectional driving gear (24), the rear gear (29) and the transmission shaft (21a) will be forwardly rotated (F) as being engageably driven by the reverse-rotation gear set (28), thereby also forwardly driving (F) the front gear (26) for outputting unidirectional rotary motion with rotary kinetic energy through the output gear (21c) as engaged with the front gear (26) and through the output shaft 21b having the output gear (21c) secured on the output shaft (21b); and said transmission shaft (21a) and said output shaft (21b) respectively rotatably mounted in the main housing (20).

2. A kinetic energy transmission system according to Claim 1, wherein each said forward-rotation ratchet tooth (241), formed on the first wheel surface (242) of the bidirectional driving gear (24), comprises: at least a tooth slope (241s) inclined leftwardly from a tooth ridge (241r) towards the first wheel surface (242) to define an acute angle (241a) with the first wheel surface (242) as measured from the forward-rotation direction (F); each said reverse-rotation ratchet tooth (243) comprising at least a tooth slope (243s) inclined rightwardly from a tooth ridge (243r) towards the second wheel surface (244) to define an acute angle (243a) with the second wheel surface (244) as measured from the reverse-rotation direction (R).

3. A kinetic energy transmission system according to Claim 1, wherein each said forward-rotation ratchet tooth (251) formed on the rear wheel surface (252) of the forward-rotation clutch (25) comprises at least a tooth slope (251s) inclined rightwardly from a tooth ridge (251r) towards the rear wheel surface (252) to define an obtuse angle (251a) with the rear wheel surface (252) as measured from the forward-rotation direction (F), whereby upon a forward rotation (F) of the bidirectional driving gear (24), the forward-rotation ratchet teeth (241) of the bidirectional driving gear (24) will be engaged with the forward-rotation ratchet teeth (251) of the forward-rotation clutch (25) to forwardly rotate (F) the forward-rotation clutch (25).

4. A kinetic energy transmission system according to Claim 1, wherein each said reverse-rotation ratchet tooth (271) formed on the front wheel surface (272) of the reverse-rotation clutch (27) comprises at least a tooth slope (271s) inclined leftwardly from a tooth ridge (271r) towards the front wheel surface (272) to define an obtuse angle (271a) with the front wheel surface (272) as measured from the reverse-rotation direction (R), whereby upon a reverse rotation (R) of the bidirectional driving gear (24), the reverse-rotation ratchet teeth (243) of the bidirectional driving gear (24) will be engaged with the reverse-rotation teeth (271) of the reverse-rotation clutch (27) to reversely rotate (R) the reverse-rotation clutch (27).

5. A kinetic energy transmission system according to Claim 1, wherein said forward-rotation clutch (25) comprises a pair of protruding keys (253) diametrically formed on the clutch (25), each said protruding key (253) disposed between a central clutch hole (254) and a periphery of the clutch (25), and the two said protruding keys (253) protruding forwardly from a front surface of the clutch (25) to be slidably engaged with a pair of sliding slot (262) diametrically recessed in a pair of extensions (261) disposed about a central gear hole (260) and formed on a rear surface of the front gear (26).

## Patentansprüche

1. Übertragungssystem für kinetische Energie, das Folgendes umfasst: einen Hub-Aktuator (100) und einen Richtungsumkehr- und Energieausgabemechanismus (200), der mit dem Hub-Aktuator (100) verbunden ist und Folgendes umfasst: ein Hauptgehäuse (20); eine Antriebswelle (21), die in dem Hauptgehäuse (20) drehbar montiert ist, die ein Wellenende der Antriebswelle (21) aufweist, das mit dem Hub-Aktuator (100) verbunden ist, um eine Hub-Antriebsbewegung von dem Hub-Aktuator (100) aufzunehmen; ein Antriebsritzel (22), das an der Antriebswelle (21) angebracht ist; ein Zwischenzahnrad (23), das drehbar in dem Hauptgehäuse (20) montiert ist, und **dadurch gekennzeichnet, dass** der Richtungsumkehr- und Energieausgabemechanismus (200) Folgendes umfasst:
ein bidirektionales Antriebszahnrad (24), das drehbar um eine Übertragungswelle (21a) montiert ist und mit dem Zwischenzahnrad (23) in Eingriff steht; wobei das bidirektionale Antriebszahnrad (24) eine Vielzahl an Vorwärtsrotationssperrzähnen (241) aufweist, die ringförmig auf einer ersten Radoberfläche (242) des bidirektionalen Antriebszahnrads (24) ausgebildet sind, und eine Vielzahl von Rückwärtsrotationssperrzähnen (243) aufweist, die ringförmig auf einer zweiten Radoberfläche (244) des bidirektionalen Antriebszahnrads (24), die der ersten Radoberfläche (242) entgegengesetzt ist, ausgebildet sind; eine Vorwärtsrotationskupplung (25), die verschiebbar um die Übertragungswelle (21a) gehalten ist, eine Vielzahl von Vorwärtsrotationssperrzähnen (251) aufweist, die ringförmig auf einer hinteren Radoberfläche (252) der Vorwärtsrotationskupplung (25) ausgebildet sind, um normal mit den Vorwärtsrotationssperrzähnen (241) in Eingriff zu gelangen, die auf der ersten Radoberfläche (242) des bidirektionalen Antriebszahnrads (24) angeordnet sind, um durch das bidirektionale Antriebszahnrad (24) vorwärts (F) rotiert oder angetrieben zu werden; ein vorderes Zahnrad (26), das an der Übertragungswelle (21a) angebracht ist und verschiebbar mit der Vorwärtsrotationskupplung (25) in Eingriff steht, um die Übertragungswelle (21a) vorwärts zu drehen, wenn die Vorwärtsrotationskupplung (25) vorwärts rotiert (F) wird, wenn sie durch das bidirektionale Antriebszahnrad (24) vorwärts angetrieben (F) wird, und das vordere Zahnrad (26) mit einem Abtriebsritzel (21c) in Eingriff steht, das an einer Abtriebswelle (21b) angebracht ist, um eine unidirektionale Rotationsbewegung mit kinetischer Rotationsenergie auszugeben; eine Rückwärtsrotationskupplung (27), die drehbar um die Übertragungswelle (21a) angebracht ist und eine Vielzahl von Rückwärtsrotationssperrzähnen (271) aufweist, die ringförmig auf einer vorderen Radoberfläche (272) der Rückwärtsrotationskupplung (27) angebracht ist, wodurch bei Rückwärtsrotation (R) des bidirektionalen Antriebszahnrads (24) die Rückwärtsrotationssperrzähne (271) auf der Rückwärtsrotationskupplung (27) mit den Rückwärtsrotationssperrzähnen (243) in Eingriff gelangen, die auf der zweiten Radoberfläche (244) des bidirektionalen Antriebszahnrads (24) ausgebildet sind, um die Rückwärtsrotationskupplung (27) rückwärts zu rotieren (R), wie durch das bidirektionale Antriebszahnrad (24) angetrieben; und ein Rückwärtsrotationszahnradsatz (28), der zwischen der Rückwärtsrotationskupplung (27) und einem hinteren Zahnrad (29), das an der Übertragungswelle (21a) angebracht ist, in Eingriff steht, wodurch bei Rückwärtsrotation (R) des bidirektionalen Antriebszahnrads (24) das hintere Zahnrad (29) und die Übertragungswelle (21a) vorwärts rotiert (F) werden, wie sie durch den Rückwärtsrotationszahnradsatz (28) eingreifbar angetrieben wird, wodurch auch das vordere Zahnrad (26) vorwärts angetrieben (F) wird, um eine unidirektionale Rotationsbewegung mit kinetischer Rotationsenergie über das Abtriebsritzel (21c), das mit dem vorderen Zahnrad (26) in Eingriff steht, und über die Abtriebswelle (21b), die das Abtriebsritzel (21c) an der Abtriebswelle (21b) angebracht aufweist, auszugeben; und wobei die Übertragungswelle (21a) und die Abtriebswelle (21b) jeweils drehbar in dem Hauptgehäuse (20) montiert sind.

2. Übertragungssystem für kinetische Energie nach Anspruch 1, wobei jeder Vorwärtsrotationssperrzahn (241), der auf der ersten Radoberfläche (242) des bidirektionalen Antriebszahnrads (24) ausgebildet ist, Folgendes umfasst: zumindest eine Zahnschräge (241s), die von einem Zahnrücken (241r) nach links in Richtung der ersten Radoberfläche (242) geneigt ist, um einen spitzen Winkel (241a) mit der ersten Radoberfläche (242), gemessen von der Vorwärtsrotationsrichtung (F), zu definieren; wobei jeder Rückwärtsrotationssperrzahn (243) zumindest eine Zahnschräge (243s) umfasst, die von einem Zahnrücken (243r) nach rechts in Richtung der zweiten Radoberfläche (244) geneigt ist, um einen spitzen Winkel (243a) mit der zweiten Radoberfläche (244), gemessen von der Rückwärtsrotationsrichtung (R), zu definieren.

3. Übertragungssystem für kinetische Energie nach Anspruch 1, wobei jeder Vorwärtsrotationssperrzahn (251), die auf der hinteren Radoberfläche (252) der Vorwärtsrotationskupplung (25) ausgebildet sind, zumindest eine Zahnschräge (251s) umfasst, die von einem Zahnrücken (251r) in Richtung der hinteren Radoberfläche (252) nach rechts geneigt ist, um einen stumpfen Winkel (251a) mit der hinteren Radoberfläche (252), gemessen von der Vorwärtsrotationsrichtung (F), zu definieren, wodurch bei einer Vorwärtsrotation (F) des bidirektionalen Antriebszahnrads (24) die Vorwärtsrotationssperrzähne (241) des bidirektionalen Antriebszahnrads (24) mit den Vorwärtsrotationssperrzähnen (251) der Vorwärtsrotationskupplung (25) in Eingriff gelangen, um die Vorwärtsrotationskupplung (25) vorwärts zu rotieren (F).

4. Übertragungssystem für kinetische Energie nach Anspruch 1, wobei jeder Rückwärtsrotationssperrzahn (271), der auf der vorderen Radoberfläche (272) der Rückwärtsrotationskupplung (27) ausgebildet ist, zumindest eine Zahnschräge (271s) umfasst, der von einem Zahnrücken (271r) nach links in Richtung der vorderen Radoberfläche (272) geneigt ist, um einen stumpfen Winkel (271a) mit der vorderen Radoberfläche (272), gemessen aus der Rückwärtsrotationsrichtung (R), zu definieren, wodurch bei Rückwärtsrotation (R) des bidirektionalen Antriebszahnrads (24) die Rückwärtsrotationssperrzähne (243) des bidirektionalen Antriebsrads (24) mit den Rückwärtsrotationszähnen (271) der Rückwärtsrotationskupplung (27) in Eingriff gelangen, um die Rückwärtsrotationskupplung (27) rückwärts zu rotieren (R).

5. Übertragungssystem für kinetische Energie nach Anspruch 1, wobei die Vorwärtsrotationskupplung (25) ein Paar vorstehender Keile (253) umfasst, die auf der Kupplung (25) diametrisch ausgebildet sind, wobei jeder vorstehender Keil (253) zwischen einem zentralen Kupplungsloch (254) und einem Umfang der Kupplung (25) angeordnet ist und die zwei vorstehenden Keile (253) von einer vorderen Oberfläche der Kupplung (25) vorwärts vorstehen, um mit einem Paar Gleitschlitzen (262), die in einem Paar von Fortsätzen (261), die um ein zentrales Zahnradloch (260) angeordnet und auf einer hinteren Oberfläche des vorderen Zahnrads (26) ausgebildet sind, diametrisch ausgenommen sind, verschiebbar in Eingriff zu gelangen.

## Revendications

1. Système de transmission d'énergie cinétique comprenant: un actionneur alternatif (100) ; et un mécanisme de conversion de direction et de sortie d'énergie (200) raccordé audit actionneur alternatif (100) et comprenant : un boîtier principal (20) ; un arbre d'entrée (21) monté, en rotation, dans le boîtier principal (20), ayant une extrémité d'arbre de l'arbre d'entrée (21) raccordée avec l'actionneur alternatif (100) pour recevoir un mouvement alternatif d'entrée dudit actionneur alternatif (100) ; un engrenage d'entrée (22) fixé sur l'arbre d'entrée (21) ; un engrenage intermédiaire (23) monté, en rotation, dans le boîtier principal (20), et **caractérisé en ce que** ledit mécanisme de conversion de direction et de sortie d'énergie (200) comprend :
un engrenage d'entraînement bidirectionnel (24) monté, en rotation, autour d'un arbre de transmission (21a) et mis en prise avec l'engrenage intermédiaire (23) ; l'engrenage d'entraînement bidirectionnel (24) ayant une pluralité de dents triangulaires de rotation vers l'avant (241) formées, de manière annulaire, sur une première surface de roue (242) de l'engrenage d'entraînement bidirectionnel (24), et ayant une pluralité de dents triangulaires de rotation en sens inverse (243) formées de manière annulaire sur une seconde surface de roue (244) de l'engrenage d'entraînement bidirectionnel (24) opposée à la première surface de roue (242) ; et un embrayage de rotation vers l'avant (25) maintenu, de manière coulissante, autour de l'arbre de transmission (21a), ayant une pluralité de dents triangulaires de rotation vers l'avant (251) formées de manière annulaire sur une surface de roue arrière (252) de l'embrayage de rotation vers l'avant (25) pour être normalement mis en prise avec les dents triangulaires de rotation vers l'avant (241) formées sur la première surface de roue (242) de l'engrenage d'entraînement bidirectionnel (24) pour tourner ou être entraînées vers l'avant (F) par l'engrenage d'entraînement bidirectionnel (24) ; un engrenage avant (26) fixé sur l'arbre de transmission (21a) et mis en prise, de manière coulissante, avec l'embrayage de rotation vers l'avant (25) pour faire tourner vers l'avant l'arbre de transmission (21a) lorsque l'embrayage de rotation vers l'avant (25) tourne vers l'avant (F), comme entraîné vers l'avant (F) par l'engrenage d'entraînement bidirectionnel (24), et l'engrenage avant (26) mis en prise avec l'engrenage de sortie (21c) fixé sur un arbre de sortie (21b) pour produire un mouvement de rotation unidirectionnel avec l'énergie cinétique rotative ; un embrayage de rotation en sens inverse (27) monté, en rotation, autour de l'arbre de transmission (21a) et ayant une pluralité de dents triangulaires de rotation en sens inverse (271) formées, de manière annulaire, sur une surface de roue avant (272) de l'embrayage de rotation en sens inverse (27), moyennant quoi suite à une rotation en sens inverse (R) de l'engrenage d'entraînement bidirectionnel (24), les dents triangulaires de rotation en sens inverse (271) sur l'embrayage de rotation en sens inverse (27) sont mises en prise avec les dents triangulaires de rotation en sens inverse (243) formées sur la seconde surface de roue (244) de l'engrenage d'entraînement bidirectionnel (24) afin de faire tourner en sens inverse (R) l'embrayage de rotation en sens inverse (27) tel qu'entraîné par l'engrenage d'entraînement bidirectionnel (24) ; et un ensemble d'engrenages de rotation en sens inverse (28) mis en prise entre l'embrayage de rotation en sens inverse (27) et un engrenage arrière (29) fixé sur l'arbre de transmission (21a), moyennant quoi suite à une rotation en sens inverse (R) de l'engrenage d'entraînement bidirectionnel (24), l'engrenage arrière (29) et l'arbre de transmission (21a) sont entraînés en rotation vers l'avant (F) tel qu'étant entraînés, en mise en prise, par l'ensemble d'engrenages de rotation en sens inverse (28), entraînant ainsi également vers l'avant (F) l'engrenage avant (26) pour produire le mouvement de rotation unidirectionnel avec l'énergie cinétique rotative par le biais de l'engrenage de sortie (21c) tel que mis en prise avec l'engrenage avant (26) et par le biais de l'arbre de sortie (21b) ayant l'engrenage de sortie (21c) fixé sur l'arbre de sortie (21b); et ledit arbre de transmission (21a) et ledit arbre de sortie (21b) étant respectivement montés en rotation dans le boîtier principal (20).

2. Système de transmission d'énergie cinétique selon la revendication 1, dans lequel chacune desdites dents triangulaires de rotation vers l'avant (241), formées sur la première surface de roue (242) de l'engrenage d'entraînement bidirectionnel (24) comprend : au moins une inclinaison de dent (241s) inclinée vers la gauche à partir d'une saillie de dent (241r) vers la première surface de roue (242) afin de définir un angle aigu (241a) avec la première surface de roue (242) tel que mesuré à partir de la direction de rotation vers l'avant (F) ; chacune desdites dents triangulaires de rotation en sens inverse (243) comprenant au moins une inclinaison de dent (243s) inclinée vers la droite à partir d'une saillie de dent (243r) vers la seconde surface de roue (244) afin de définir un angle aigu (243a) avec la seconde surface de roue (244), tel que mesuré à partir de la direction de rotation en sens inverse (R).

3. Système de transmission d'énergie cinétique selon la revendication 1, dans lequel chacune desdites dents triangulaires de rotation vers l'avant (251) formées sur la surface de roue arrière (252) de l'embrayage de rotation vers l'avant (25) comprend au moins une inclinaison de dent (251s) inclinées vers la droite à partir d'une saillie de dent (251r) vers la surface de roue arrière (252) afin de définir un angle obtus (251a) avec la surface de roue arrière (252), tel que mesuré à partir de la direction de rotation vers l'avant (F), moyennant quoi suite à une rotation vers l'avant (F) de l'engrenage d'entraînement bidirectionnel (24), les dents triangulaires de rotation vers l'avant (241) de l'engrenage d'entraînement bidirectionnel (24) sont mises en prise avec les dents triangulaires de rotation vers l'avant (251) de l'embrayage de rotation vers l'avant (25) afin de faire tourner vers l'avant (F), l'embrayage de rotation vers l'avant (25).

4. Système de transmission d'énergie cinétique selon la revendication 1, dans lequel chacune desdites dents triangulaires de rotation en sens inverse (271) formées sur la surface de roue avant (272) de l'embrayage de rotation en sens inverse (27) comprend au moins une inclinaison de dent (271s) inclinée vers la gauche à partir d'une saillie de dent (271r) vers la surface de roue avant (272) afin de définir un angle obtus (271a) avec la surface de roue avant (272), tel que mesuré à partir de la direction de rotation en sens inverse (R), moyennant quoi suite à une rotation en sens inverse (R) de l'engrenage d'entraînement bidirectionnel (24), les dents triangulaires de rotation en sens inverse (243) de l'engrenage d'entraînement bidirectionnel (24) sont mises en prise avec les dents de rotation en sens inverse (271) de l'embrayage de rotation en sens inverse (27) afin de faire tourner en sens inverse (R) l'embrayage de rotation en sens inverse (27).

5. Système de transmission d'énergie cinétique selon la revendication 1, dans lequel ledit embrayage de rotation vers l'avant (25) comprend une paire de clavettes en saillie (253) diamétralement formées sur l'embrayage (25), chacune desdites clavettes en saillie (253) étant disposée entre un trou d'embrayage central (254) et une périphérie de l'embrayage (25), et les deux desdites clavettes en saillie (253) faisant saillie vers l'avant à partir d'une surface avant de l'embrayage (25) pour être mises en prise, de manière coulissante, avec une paire de fentes de coulissement (262) diamétralement enfoncées dans une paire d'extensions (261) disposées autour d'un trou d'engrenage central (260) et formées sur une surface arrière de l'engrenage avant (26).
